# FASCICULE DE BREVET EUROPEEN

(11) **EP 2 917 519 B1**
(45) Date de publication et mention de la délivrance du brevet: **15.08.2018**
(21) Numéro de dépôt: 13803104.2
(22) Date de dépôt: 04.11.2013
(51) Int. Cl.: F01M 13/00, F01D 25/28, F01D 25/30

(54) **SUPPORT DE TUBE D'ÉVACUATION D'AIR DANS UNE TURBOMACHINE**
AUFNAHME EINES ENTLÜFTUNGSROHR EINER TURBOMACHINE
AIR EXHAUST TUBE HOLDER IN A TURBOMACHINE

(30) Priorité: 12.11.2012 FR 1260750
(43) Date de publication de la demande: 16.09.2015
(73) Titulaire: Safran Aircraft Engines, 75015 Paris (FR)
(72) Inventeur: SULTANA, Patrick, F-77550 Moissy Cramayel Cedex (FR); BENSALAH, Boucif, F-77550 Moissy Cramayel Cedex (FR); DURAND, Yannick, F-77550 Moissy Cramayel Cedex (FR); RENON, Olivier, F-77550 Moissy Cramayel Cedex (FR)
(74) Mandataire: Robert, Mathias
(86) Numéro de dépôt international: PCT/FR2013/052625
(87) Numéro de publication internationale: WO 2014/072626

(56) Documents cités:
- EP-A1- 2 085 574
- EP-A1- 2 395 214
- CH-A1- 702 182
- US-A1- 2004 088 989

## Description

La présente invention concerne un support de tube d'évacuation d'air chargé en huile d'une turbomachine.

Une turbomachine, telle qu'un turboréacteur ou un turbopropulseur, comporte classiquement, d'amont en aval dans le sens d'écoulement des gaz, une soufflante, un compresseur basse pression, un compresseur haute pression, une chambre de combustion, une turbine haute pression, une turbine basse pression, et une tuyère d'échappement des gaz. A chaque étage de compresseur correspond un étage de turbine, les deux étant reliés par un arbre de façon à former un corps, en particulier un corps basse pression et un corps haute pression.

L'arbre du corps basse pression peut être creux et contenir un tube, couramment appelé « Center Vent Tube » ou « CVT ». Ce tube comporte une partie amont mobile en rotation, prolongée par une partie aval fixe et permet l'évacuation d'air chargé en huile, issu de certaines enceintes de la turbomachine.

La partie aval de ce tube traverse un cône d'éjection auquel il est relié par un support comportant une partie annulaire interne de section générale en Oméga, entourant le tube, et une partie conique fixée au cône d'éjection et à la partie annulaire interne. La partie conique comporte des trous de passage d'un débit d'air de refroidissement traversant le cône d'éjection. En outre, la partie conique du support est fixée à la partie annulaire interne par l'intermédiaire de vis.

Le cône d'éjection est soumis à des températures comprises entre 650°C et 680°C, alors que le tube peut être à une température comprise entre 450°C et 480°C. Cette différence de température importante (240°C) génère des phénomènes de dilatation thermique, des contraintes et des déplacements que le support doit pouvoir absorber tout en conservant ses qualités de rigidité.

Pour parvenir à un tel compromis, le support actuel est relativement lourd, ce qui augmente la masse totale de la turbomachine, en plus d'être coûteux. US 2004/0088989 décrit un dispositif similaire. L'invention a notamment pour but d'apporter une solution simple, efficace et économique à ce problème.

A cet effet, elle propose un support destiné à porter un tube d'évacuation d'air chargé en huile d'une turbomachine, comportant une partie annulaire radialement interne, destinée à être montée autour dudit tube, caractérisé en ce qu'il comporte des ailettes s'étendant vers l'extérieur depuis la partie annulaire, lesdites ailettes étant inclinées par rapport à la direction axiale de la partie annulaire et par rapport au plan radial, la périphérie radialement externe des ailettes étant destinée à être fixée à un cône d'éjection de la turbomachine.

Un tel support a un poids relativement réduit, est peu coûteux, permet le passage de l'air au travers du cône d'éjection, et supporte convenablement les effets de dilatations thermiques pouvant se produire en fonctionnement, tout en assurant sa fonction de support du tube.

A titre de comparaison, un tel support est environ cinq à six fois plus léger que le support actuel.

Selon une caractéristique de l'invention, la partie annulaire interne comporte une bague interne cylindrique à partir de laquelle une coupelle annulaire tronconique s'étend radialement vers l'extérieur, chaque ailette s'étendant vers l'extérieur dans le prolongement de ladite coupelle.

De préférence, la longueur de la bague interne cylindrique est inférieure ou égale à 0,4 fois son diamètre interne.

De cette manière, la bague interne cylindrique est un guidage court formant, dans une certaine mesure, une liaison rotule entre le tube et le support.

Selon une autre caractéristique de l'invention, chaque ailette comporte une périphérie interne reliée à la partie annulaire et une périphérie externe comportant une zone de fixation au cône d'éjection, formant un angle avec le reste de l'ailette.

Avantageusement, chaque zone de fixation a la forme d'une portion de cône, complémentaire du cône d'éjection.

En outre, les ailettes et la partie annulaire interne peuvent être réalisées en superalliage à base de Nickel, par exemple en INCONEL 625 ou en INCONEL 718.

A titre d'exemple, le nombre d'ailettes est compris entre 3 et 14.

L'invention concerne également un ensemble pour une turbomachine comportant un tube d'évacuation d'air chargé en huile d'une turbomachine, ledit tube comportant une partie amont mobile en rotation et une partie aval fixe, ladite partie aval traversant un cône d'éjection et s'étendant selon l'axe dudit cône d'éjection, ladite partie aval étant entourée par la partie annulaire interne d'un support du type précité, de façon à ce que ladite partie aval soit montée axialement libre en rotation et en translation dans ladite partie annulaire interne, les ailettes du support étant en outre fixées au cône d'éjection par leur périphérie externe.

Selon une forme de réalisation de l'invention, le cône d'éjection comporte au moins un raidisseur annulaire, la périphérie externe de chaque ailette étant fixée au raidisseur.

L'invention concerne enfin une turbomachine, caractérisée en ce qu'elle comporte un ensemble décrit ci-dessus.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue en perspective et en coupe axiale, d'une partie d'une turbomachine actuelle,
- la figure 2 est une vue en coupe axiale illustrant le montage d'un support actuel entre un cône d'éjection et un tube d'évacuation d'air chargé en huile,

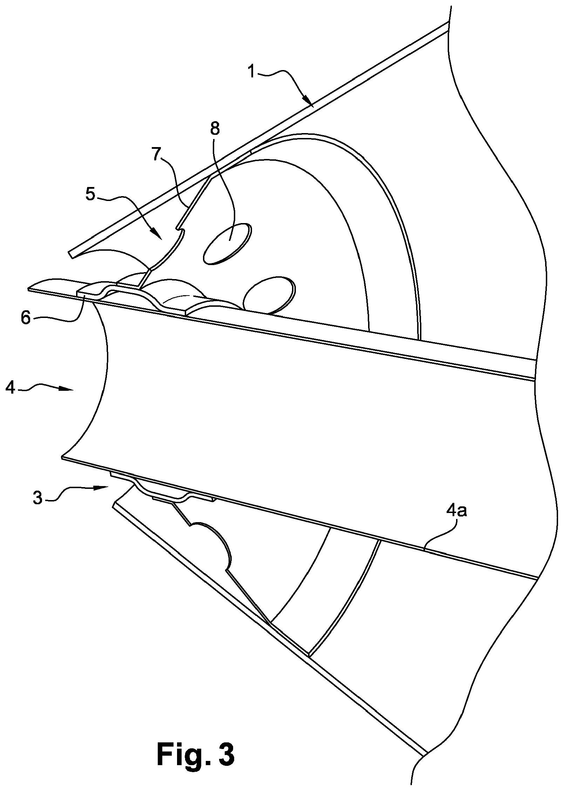

- la figure 3 est une vue en perspective du montage de la figure 2,
- la figure 4 est une vue en perspective d'un support selon une première forme de réalisation de l'invention,
- la figure 5 est une vue de côté du support de la figure 4,
- la figure 6 est une vue en perspective de la coupelle tronconique et des ailettes du support de la figure 4,
- la figure 7 est une vue en perspective de la bague cylindrique du support de la figure 4,
- la figure 8 est une vue en perspective et en arrachement partiel, d'une partie d'une turbomachine comportant le support de la figure 4,
- la figure 9 est une vue en perspective et en arrachement partiel, d'une partie d'une turbomachine comportant un support selon une seconde forme de réalisation de l'invention.
- la figure 10 est une vue de détail d'une partie de la figure 9.

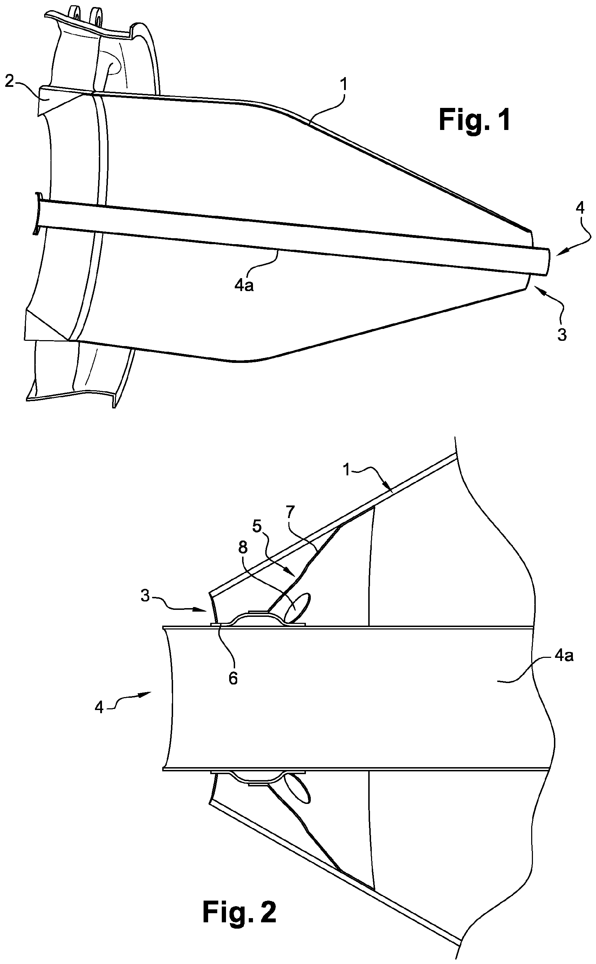

Une partie aval d'une turbomachine actuelle est représentée à la figure 1 et comporte un cône d'éjection 1 fixé en aval d'un carter d'échappement 2, lui-même situé en aval d'une turbine basse-pression (non représentée). Le cône d'éjection 1 comporte une ouverture axiale 3 à son extrémité aval.

La turbomachine comporte également un tube 4 appelé couramment « Center Vent Tube » ou « CVT » qui comporte une partie amont mobile en rotation (non visible), prolongée par une partie aval fixe 4a et qui permet l'évacuation d'air chargé en huile, issu de certaines enceintes de la turbomachine.

La partie aval 4a de ce tube 4 traverse le cône d'éjection 1 et débouche en aval de celui-ci au travers de l'ouverture 3. Ladite partie aval 4a est reliée au cône d'éjection 1 par un support 5. Ce dernier est visible à la figure 2 et comporte une partie annulaire interne 6 de section générale en Oméga, entourant le tube 4, et une partie conique 7 fixée au cône d'éjection 1 et à la partie annulaire interne 6. La partie conique 7 comporte des trous 8 permettant le passage d'un débit d'air de refroidissement traversant le cône d'éjection 1. En outre, la partie conique 7 du support 5 est fixée à la partie annulaire interne 6 par l'intermédiaire de vis (non représentées).

Comme indiqué précédemment, un tel support 5 est relativement lourd et coûteux.

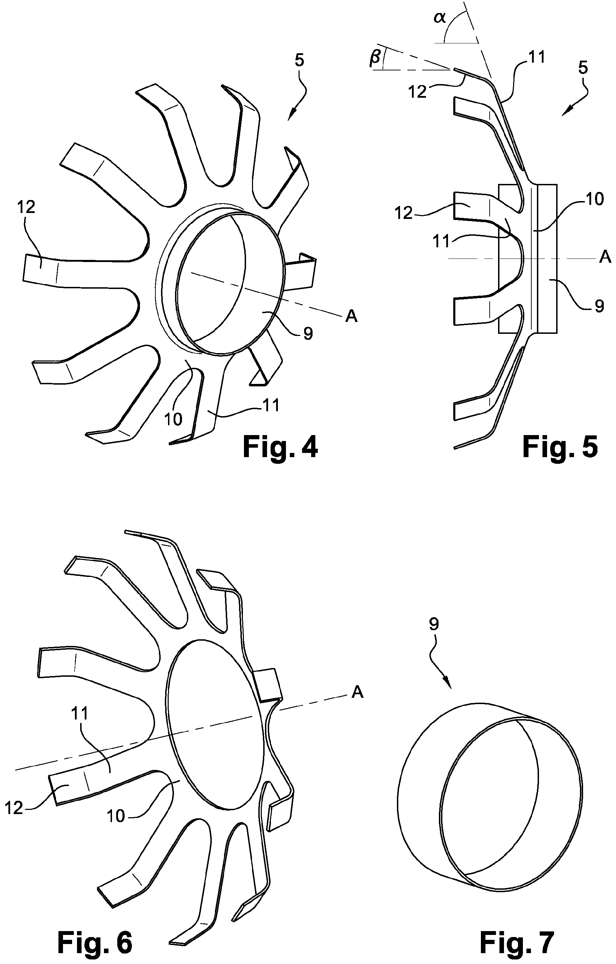

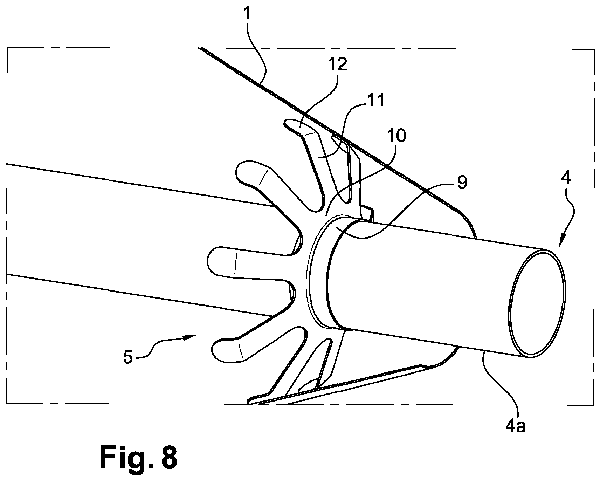

Afin de remédier à ces inconvénients, l'invention propose de relier la partie aval 4a du tube 4 au cône d'éjection 1 par le support 5 illustré aux figures 4 à 8. Ce support 5 est réalisé par l'assemblage d'une bague cylindrique 9, destinée à être montée autour dudit tube 4, et d'une coupelle tronconique 10 à partir de laquelle s'étendent des ailettes 11. La longueur de la bague cylindrique 9 est inférieure ou égale à 0,4 fois son diamètre interne. De cette manière, la bague cylindrique 9 est un guidage court formant, dans une certaine mesure, une liaison rotule entre le tube 4 et le support 5. La coupelle tronconique 10 est fixée dans la zone médiane de la bague cylindrique 9. Le tube 4 est également monté libre en rotation et en translation axiale dans la bague 9. Ces différents degrés de liberté permettent notamment de compenser les éventuelles déformations en fonctionnement, dues par exemple aux contraintes mécaniques et thermiques. La bague 9 peut également comporter des chanfreins tournés radialement vers l'intérieur, au niveau de ses extrémités, de manière à ne pas endommager le tube 4 lors du montage du support 5.

L'ensemble représenté à la figure 6, formant la coupelle tronconique 10 ainsi que les ailettes 11, peut être obtenu par découpage et pliage d'une tôle, avant d'être fixé, par exemple par brasage, à la bague interne cylindrique 9 représentée à la figure 7.

Chaque ailette 11 s'étend dans le prolongement de la coupelle 10, à l'extérieur de celle-ci, et comporte une périphérie interne reliée à la coupelle 10 ainsi qu'une périphérie externe comportant une zone de fixation 12 au cône d'éjection 1, formant un angle β avec le reste de l'ailette 11. Chaque zone de fixation 12 a préférentiellement la forme d'une portion de cône et est complémentaire de la surface interne du cône d'éjection 1. Le nombre d'ailettes 11 est par exemple compris entre 3 et 14.

L'angle α de la coupelle 10 et des ailettes 11 par rapport à l'axe A du support 5 est non droit. L'angle α d'inclinaison des ailettes 11 permet de supporter convenablement les effets de dilatations thermiques pouvant se produire en fonctionnement, tout en assurant la fonction de support du tube 4.

Les ailettes 11 sont ainsi inclinées par rapport à la direction axiale A et par rapport au plan radial, perpendiculairement à l'axe A.

Les ailettes 11, la coupelle tronconique 10 et la bague cylindrique 9 sont réalisées en superalliage à base de Nickel, par exemple en INCONEL 625 (NiCr22Mo9Nb) ou en INCONEL 718.

Un tel support 5 est relativement léger, permet le passage de l'air de refroidissement entre les différentes ailettes 11 et est peu coûteux. A titre de comparaison, un tel support 5 est environ cinq à six fois plus léger que le support actuel illustré à la figure 2.

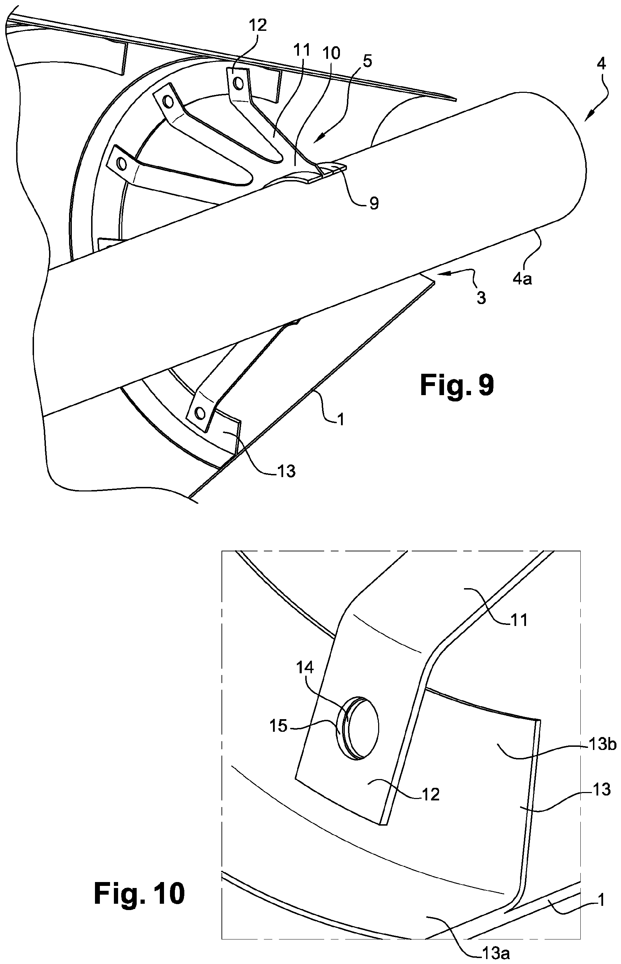

Les figures 9 et 10 illustrent une variante de réalisation de l'invention, dans laquelle la paroi interne du cône d'éjection 1 comporte des raidisseurs annulaires s'étendant radialement vers l'intérieur. Chaque raidisseur a une section en L, dont une branche 13a est fixée par exemple par soudage à la paroi interne du cône 1 et une autre branche 13b comporte des trous 14 (figure 10).

Comme précédemment, le support 5 est réalisé par l'assemblage d'une bague cylindrique 9, destinée à être montée autour dudit tube 4, et d'une coupelle tronconique 10 à partir de laquelle s'étendent des ailettes 11. Le support 5 des figures 9 et 10 diffère de celui représenté aux figures 4 à 8 en ce que la périphérie radialement externe de chaque ailette comporte une zone de fixation 12 parallèle à l'aile 13b du raidisseur situé le plus en aval et plaquée contre la paroi amont de cette aile 13b. Chaque zone de fixation 12 comporte un trou 15 disposé en regard d'un trou 14 correspondant.

Ces trous 14, 15 permettent le passage de vis de fixation du support 5 au raidisseur 13, destinées à coopérer par exemple avec des écrous rivetés dans les trous 15 des ailettes 11 du support 5, ou dans les trous 14 du raidisseur 13.

## Revendications

1. Support (5) destiné à porter un tube (4) d'évacuation d'air chargé en huile d'une turbomachine, comportant une partie annulaire (9, 10) radialement interne, destinée à être montée autour dudit tube (4), **caractérisé en ce qu'**il comporte des ailettes (11) s'étendant vers l'extérieur depuis la partie annulaire (9, 10), lesdites ailettes étant inclinées par rapport à la direction axiale (A) de la partie annulaire (9, 10) et par rapport au plan radial, la périphérie radialement externe (12) des ailettes (11) étant destinée à être fixée à un cône d'éjection (1) de la turbomachine.

2. Support (5) selon la revendication 1, **caractérisé en ce que** la partie annulaire interne comporte une bague interne cylindrique (9) à partir de laquelle une coupelle annulaire tronconique (10) s'étend radialement vers l'extérieur, chaque ailette (11) s'étendant vers l'extérieur dans le prolongement de ladite coupelle (10).

3. Support (5) selon la revendication 2, **caractérisé en ce que** la longueur de la bague interne cylindrique (9) est inférieure ou égale à 0,4 fois son diamètre interne.

4. Support (5) selon l'une des revendications 1 à 3, **caractérisé en ce que** chaque ailette (11) comporte une périphérie interne reliée à la partie annulaire (9, 10) et une périphérie externe comportant une zone (12) de fixation au cône d'éjection (1), formant un angle avec le reste de l'ailette (11).

5. Support (5) selon la revendication 4, **caractérisé en ce que** chaque zone de fixation (12) a la forme d'une portion de cône.

6. Support (5) selon l'une des revendications 1 à 5, **caractérisé en ce que** les ailettes (11) et la partie annulaire interne (9, 10) sont réalisées en superalliage à base de Nickel, par exemple en INCONEL 625 ou en INCONEL 718.

7. Support (5) selon l'une des revendications 1 à 6, **caractérisé en ce que** le nombre d'ailettes (11) est compris entre 3 et 14.

8. Ensemble pour une turbomachine comportant un tube (4) d'évacuation d'air chargé en huile d'une turbomachine, ledit tube (4) comportant une partie amont mobile en rotation et une partie aval fixe (4a), ladite partie aval (4a) traversant un cône d'éjection (1) et s'étendant selon l'axe (A) dudit cône d'éjection (1), ladite partie aval (4a) étant entourée par la partie annulaire interne (9, 10) d'un support (5) selon l'une des revendications 1 à 7, de façon à ce que ladite partie aval (4a) soit montée axialement libre en rotation et en translation dans ladite partie annulaire interne (9, 10), les ailettes (11) du support (5) étant en outre fixées au cône d'éjection (1) par leur périphérie externe (12).

9. Ensemble selon la revendication 8, **caractérisé en ce que** le cône d'éjection comporte au moins un raidisseur annulaire (13), la périphérie externe (12) de chaque ailette (11) étant fixée au raidisseur (13).

10. Turbomachine, **caractérisée en ce qu'**elle comporte un ensemble selon la revendication 8 ou 9.

## Patentansprüche

1. Halterung (5) für ein Rohr (4) zum Ablassen ölhaltiger Luft einer Turbomaschine, welche einen radial inneren ringförmigen Teil (9, 10) umfasst, der dazu bestimmt ist, um besagtes Rohr (4) herum montiert zu werden, **dadurch gekennzeichnet, dass** sie Flügel (11) umfasst, die sich vom ringförmigen Teil (9, 10) nach außen erstrecken, wobei besagte Flügel in die axiale Richtung (A) des ringförmigen Teils (9, 10) relativ zur radialen Ebene geneigt sind und der radial äußere Rand (12) der Flügel (11) dazu bestimmt ist, an einem Auswurfkegel (1) der Turbomaschine befestigt zu werden.

2. Halterung (5) nach Anspruch 1, **dadurch gekennzeichnet, dass** der innere ringförmige Teil einen zylindrischen inneren Ring (9) enthält, von dem aus sich eine kegelstumpfförmige ringförmige Napf (10) radial nach außen erstreckt, wobei sich jeder Flügel (11) in der Verlängerung der besagten Napf (10) nach außen erstreckt.

3. Halterung (5) nach Anspruch 2, **dadurch gekennzeichnet, dass** die Länge des zylindrischen inneren Rings (9) kleiner oder gleich 0,4 Mal der Innendurchmesser des Rings ist.

4. Halterung (5) nach einem der Ansprüche 1 bis 3, **dadurch gekennzeichnet, dass** jeder Flügel (11) einen inneren Rand aufweist, der mit dem ringförmigen Teil (9, 10) verbunden ist, und einen äußeren Rand mit einem Befestigungsbereich (12) für den Auswurfkegel (1), und mit dem übrigen Flügel (11) einen Winkel bildet.

5. Halterung (5) nach Anspruch 4, **dadurch gekennzeichnet, dass** jeder Befestigungsbereich (12) die Form eines Kegelabschnitts hat.

6. Halterung (5) nach einem der Ansprüche 1 bis 5, **dadurch gekennzeichnet, dass** die Flügel (11) und der innere ringförmige Teil (9, 10) aus einer Nickel-Superlegierung, zum Beispiel aus INCONEL 625 oder INCONEL 718 hergestellt sind.

7. Halterung (5) nach einem der Ansprüche 1 bis 6, **dadurch gekennzeichnet, dass** die Anzahl der Flügel (11) zwischen 3 und 14 beträgt.

8. Baugruppe für eine Turbomaschine, welche ein Rohr (4) zum Ablassen ölhaltiger Luft einer Turbomaschine enthält, wobei das Rohr (4) einen drehbaren stromaufwärtigen Teil und einen feststehenden stromabwärtigen Teil (4a) umfasst, wobei der stromaufwärtige Teil (4a) durch einen Auswurfkegel (1) führt und sich der Achse (A) des besagten Auswurfkegels (1) entlang erstreckt, wobei der stromabwärtige Teil (4a) vom inneren ringförmigen Teil (9, 10) einer Halterung (5) gemäß einem der Ansprüche 1 bis 7 umgeben ist, so dass besagter stromabwärtiger Teil (4a) in besagten inneren ringförmigen Teil (9, 10) axial frei drehend und translatorisch montiert wird, und die Flügel (11) der Halterung (5) des Weiteren über ihren äußeren Rand (12) am Auswurfkegel (1) befestigt sind.

9. Einheit nach Anspruch 8, **dadurch gekennzeichnet, dass** der Auswurfkegel mindestens eine ringförmige Versteifung (13) aufweist, wobei der äußere Rand (12) jedes Flügels (11) an der Versteifung (13) befestigt ist.

10. Turbomaschine, **dadurch gekennzeichnet, dass** sie eine Einheit nach Anspruch 8 oder 9 enthält.

## Claims

1. A support (5) for carrying a tube (4) for discharging oil-laden air from a turbine engine, the support comprising a radially inner annular portion (9, 10) for mounting around said tube (4) and being **characterized in that** it includes fins (11) extending outwards from the annular portion (9, 10), said fins being inclined relative to the axial direction (A) of the annular portion (9, 10) and relative to the radial plane, the radially outer periphery (12) of each fin (11) being for fastening to an exhaust cone (1) of the turbine engine.

2. A support (5) according to claim 1, **characterized in that** the inner annular portion comprises a cylindrical inner ring (9) from which a frustoconical annular cup (10) extends radially outwards, each fin (11) extending outwards in line with said cup (10).

3. A support (5) according to claim 2, **characterized in that** the length of the cylindrical inner ring (9) is less than or equal to 0.4 times its inner diameter.

4. A support (5) according to any one of claims 1 to 3, **characterized in that** each fin (11) has an inner periphery connected to the annular portion (9, 10) and an outer periphery including a fastener zone (12) for fastening to the exhaust cone (1), forming an angle relative to the remainder of the fin (11).

5. A support (5) according to claim 4, **characterized in that** each fastener zone (12) is in the form of a portion of a cone.

6. A support (5) according to any one of claims 1 to 5, **characterized in that** the fins (11) and the inner annular portion (9, 10) are made of a nickel-based superalloy, e.g. out of Inconel 625 or out of Inconel 718.

7. A support (5) according to any one of claims 1 to 6, **characterized in that** the number of fins (11) lies in the range from 3 to 14.

8. An assembly for a turbine engine having a tube (4) for discharging oil-laden air from a turbine engine, said tube (4) comprising an upstream portion that is movable in rotation and a fixed downstream portion (4a), said downstream portion (4a) passing through an exhaust cone (1) and extending along the axis (A) of said exhaust cone (1), said downstream portion (4a) being surrounded by the inner annular portion (9, 10) of a support (5) according to any one of claims 1 to 7 so that said downstream portion (4a) is mounted to be free to move axially in translation and in rotation in said inner annular portion (9, 10), the fins (11) of the support (5) also being fastened to the exhaust cone (1) via their outer peripheries (12).

9. An assembly according to claim 8, **characterized in that** the exhaust cone includes at least one annular stiffener (13), the outer periphery (12) of each fin (11) being fastened to the stiffener (13).

10. A turbine engine, **characterized in that** it includes an assembly according to claim 8 or claim 9.
